Europäisches Patentamt

(19) European Patent Office

Office européen des brevets

(11) Publication number : **0 437 235 A2**

## (12) EUROPEAN PATENT APPLICATION

(21) Application number : **91100173.3**

(22) Date of filing : **07.01.91**

(30) Priority : **09.01.90 JP 1939/90**

(43) Date of publication of application :
**17.07.91 Bulletin 91/29**

(84) Designated Contracting States :
**DE GB**

(71) Applicant : **SEIKO INSTRUMENTS &
ELECTRONICS LTD.
31-1, Kameido 6-chome
Koto-ku Tokyo 136 (JP)**

(51) Int. Cl.⁵ : **G06F 9/40, G06F 9/42**

(72) Inventor : **Oohara, Akira
c/o Seiko Instruments Inc., 31-1, Kameido
6-chome
Koto-ku, Tokyo (JP)**

(74) Representative : **Fleuchaus, Leo, Dipl.-Ing. et
al
Melchiorstrasse 42
W-8000 München 71 (DE)**

(54) Stacking system of single chip microcomputer.

㉗    The stack system operates when executing a call command for storing a single of return address data in one designated address location or block. On the other hand, the stack system operates to store a plurality of object register data for use in execution of a push command in one designated address block when retrieving contents or data from plural object registers, thereby improving operation efficiency of the RAM.

# F I G. 5

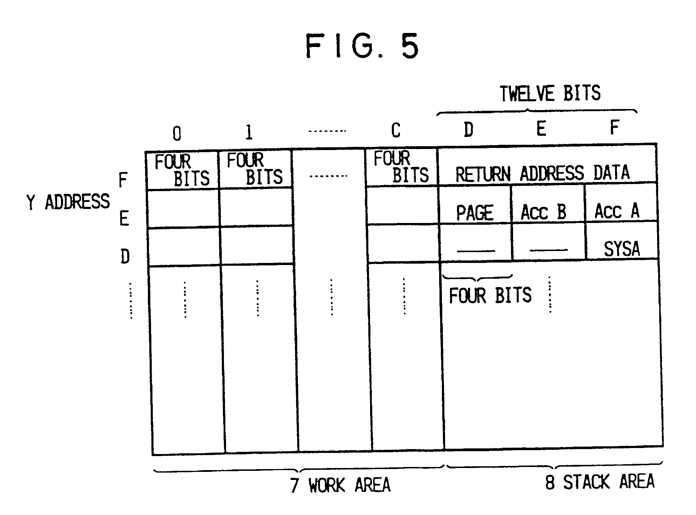

FIG. 5 — TWELVE BITS

|  |  | 0 | 1 | ......... | C | D | E | F |
|---|---|---|---|---|---|---|---|---|
| Y ADDRESS | F | FOUR BITS | FOUR BITS | ......... | FOUR BITS | RETURN ADDRESS DATA | | |
|  | E |  |  |  |  | PAGE | ACC B | ACC A |
|  | D |  |  |  |  | — | — | SYSA |
|  |  | ⋮ | ⋮ | ⋮ | ⋮ | FOUR BITS | | ⋮ |

7 WORK AREA          8 STACK AREA

## STACKING SYSTEM OF SINGLE CHIP MICROCOMPUTER

### BACKGROUND OF THE INVENTION

The present invention relates to a stacking system of single chip microcomputer.

Figs. 2A and 2B show one conventional stacking system. As shown in Fig. 2A, return address data at execution of a call command is stored in a corresponding hardware or $RAM_4$, while as shown in Fig. 2B object register data at execution of a push command is stored in a separate $RAM_5$.

Fig. 3 shows another conventional stacking system, wherein return address data for use in a call command and object register data for use in a push command are stored in the same $RAM_6$ at addresses of the same data length capacity.

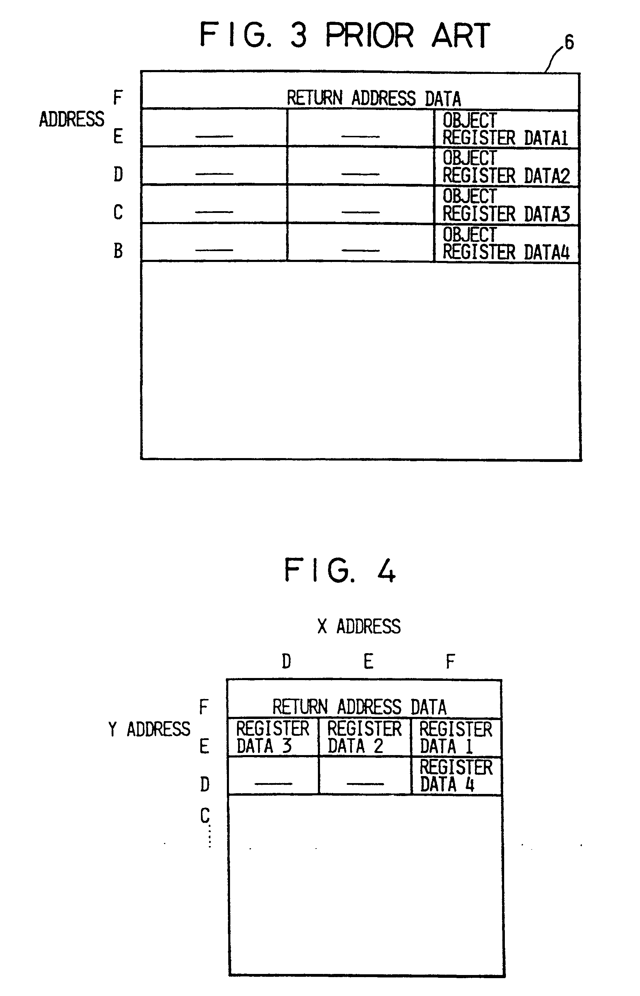

In the Figs. 2A and 2B prior art, the individual $RAM_4$ and $RAM_5$ may be efficiently used independently from each other. However, the $RAM_4$ and $RAM_5$ cannot interchange their function to each other. Such feature may not cause serious drawbacks when using a large scale RAM. However, such feature would be disadvantageous in a single chip device. For example, when the $RAM_5$ is frequently used and the $RAM_4$ is rarely used, vacant area of the $RAM_4$ is useless.

In the Fig. 3 prior art, when storing a plurality of register data or stack data in a plurality of RAM addresses at a push command, each address has empty data bits, thereby disadvantageously reducing operation efficiency of the RAM.

### SUMMARY OF THE INVENTION

In order to eliminate the above noted drawbacks of the prior art, an object of the invention is to change assignment of data to the RAM address according to commands to improve operation efficiency of the RAM.

In order to achieve the above noted object, the inventive stacking system is provided with a common RAM for storing return address data used when executing a call command and for storing object or stack register data when executing a push command. The stack register data is located at a particular area of plural addresses.

### BRIEF DESCRIPTION OF THE DRAWINGS

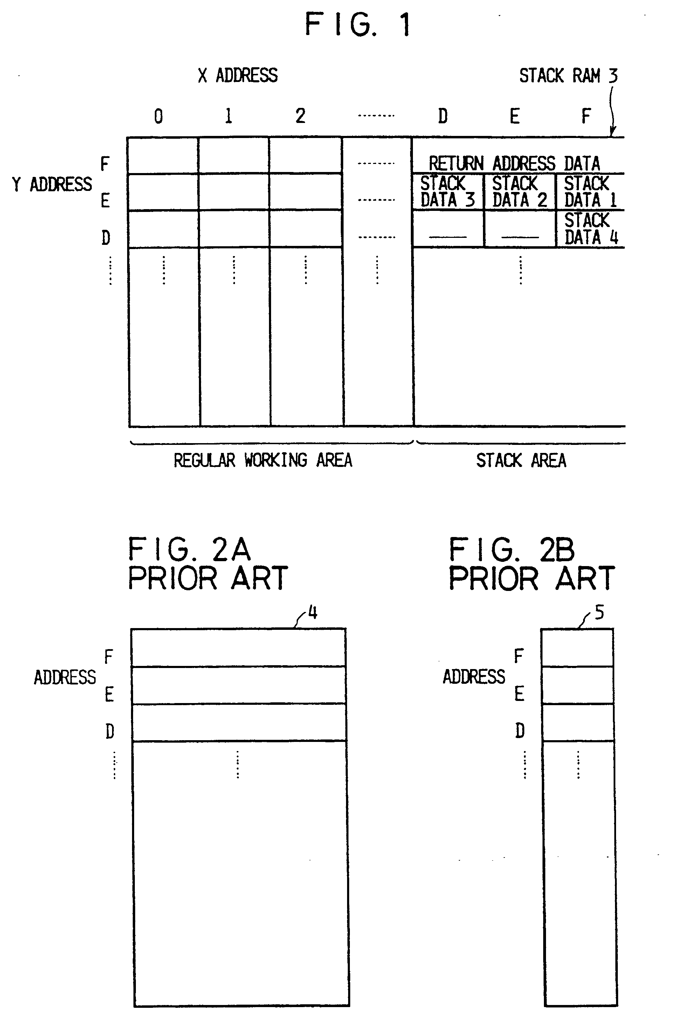

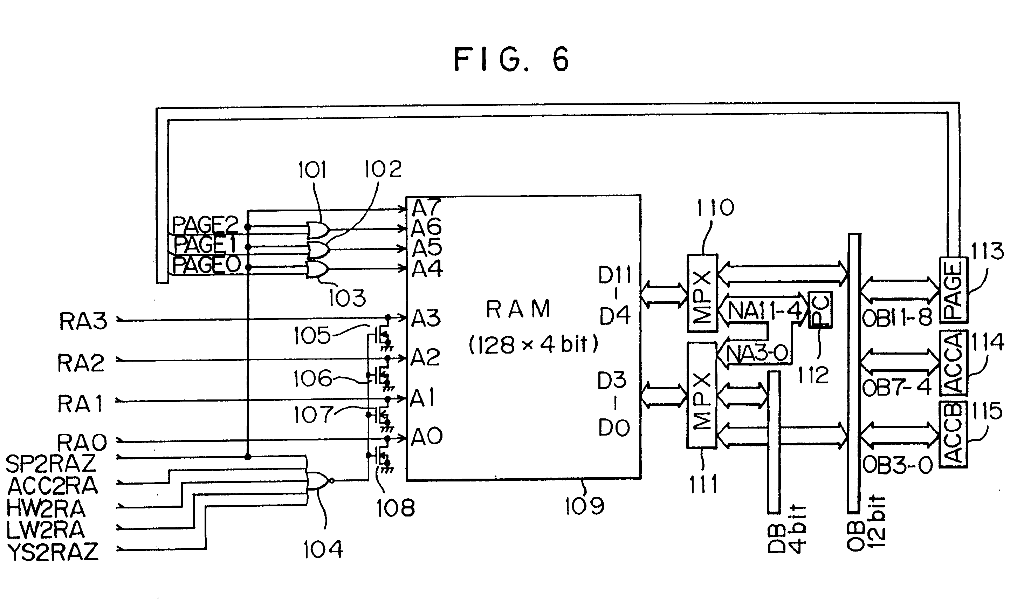

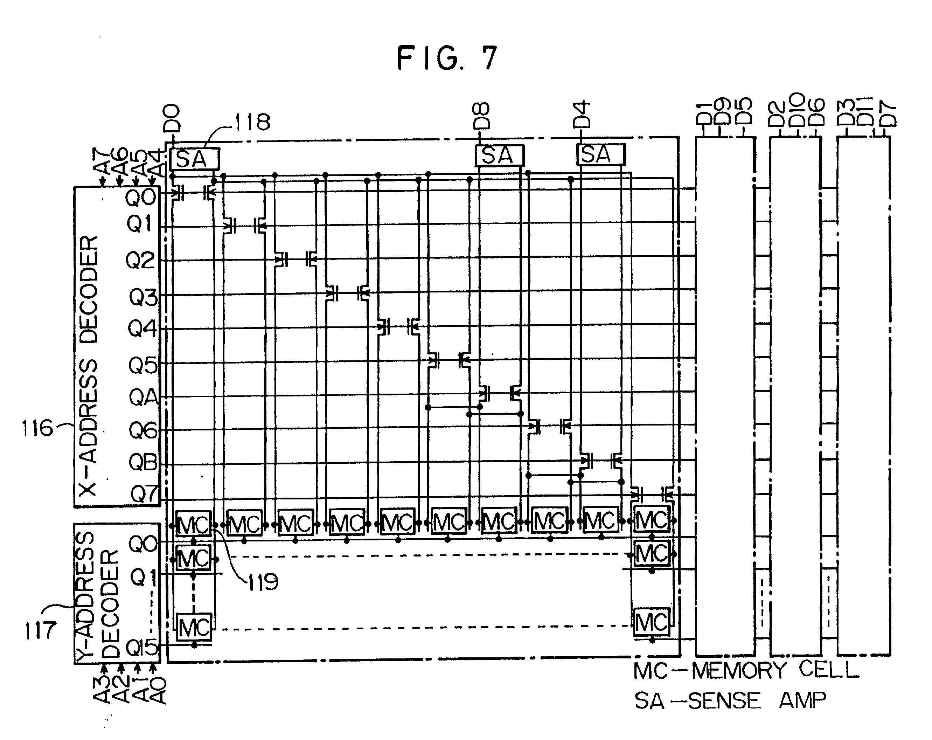

Fig. 1 is a structural view of a RAM used in the inventive stacking system ; Figs. 2A and 2B show one type of the conventional stacking RAM structure ; Fig. 3 shows another type of the conventional stacking RAM structure ; Fig. 4 is an illustrative diagram showing the operation of the RAM according to the invention ; Fig. 5 is a structural diagram of one embodiment of the inventive stacking system of a single chip microcomputer ; Fig. 6 is a detailed circuit diagram of a control circuit of the stack RAM ; and Fig. 7 is a detailed circuit structure of the stack RAM.

### DETAILED DESCRIPTION OF EMBODIMENTS

Referring to Fig. 1, the stack system operates when executing a call command for storing a single of return address data in one designated address location or block of a stack $RAM_3$. On the other hand, the stack system operates to store a plurality of object register data or stack data for use in execution of a push command in one designated address block when retrieving contents or data from plural object registers, thereby improving operation efficiency of the RAM.

Fig. 4 shows a basic operation of a RAM according to the invention. A long bit set of return address data relating to a call command is stored in a full length of a designated address, for example, Y address F. On the other hand, short bit sets each composed of four bits and representative of register data contents for use in execution of a push command are written into divided sections of a single RAM address, i.e., Y address E. By such operation, overall operation efficiency of the RAM can be improved significantly.

Fig. 5 shows an embodiment of the inventive stacking system in a single chip microcomputer. A single RAM is provided with a work area 7 having addresses for storing working data composed of four bits, and a stack area 8 having addresses each composed of twelve-bit length for storing nest data or return address data comprised of twelve bits and stack register data comprised of four bits. Each address is assigned with a four-bit data in the work area 7. On the other hand, each address can be selectively assigned with a twelve-bit nest data or return address data and with three sets of register data such as PAGE, ACCB and ACCA having $3 \times 4 = 12$ bits. By such construction, the operation efficiency of RAM can be increased according to the invention.

Fig. 6 shows a control circuit of the inventive stacking system in a single chip microcomputer. The Fig. 6 circuit is comprised of OR gates 101, 102 and 103, an NOR gate 104, N-channel MOS FET transistors 105-108, a $RAM_{109}$, a pair of multiplexers 110 and 111, a program counter 112, a page register 113 or PAGE, an accumulator 114 or ACCA, and another accumulator 115 or ACCB. When operating the $RAM_{109}$ during normal working or processing, a signal SP2RAZ is disenabled. On the other hand, there is enabled one of four signals ACC2RA which indicates accumulator indirect addressing, LW2RA which indicates direct addressing 1, HW2RA which indicates direct addressing 2, and YS2RAZ which indicates index addressing. Accordingly, values of signals RA3, RA2, RA1 and RA0 are inputted into address terminals A3, A2, A1 and A0 of the RAM$_{109}$. Concurrently, values of signals PAGE2, PAGE1 and PAGE0 are inputted into higher order address terminals A6, A5 and A4 of the RAM$_{109}$. Input and output data is transferred through a data bus DB connected to input/output data terminals D3, D2, D1 and D0 of the RAM$_{109}$. Remaining input/output data terminals D4-D11 of the RAM$_{109}$ are pulled down.

On the other hand, when executing stack commands such as a call command and a return command, the signal SP2RAZ is enabled, and other four signals ACC2RA, LW2RA, HW2RA and YS2RAZ are disenabled. Concurrently, the signals RA3 - RA0 are turned to indicate input of a stack pointer and are Led to the address input terminals A3 - A0 of the RAM$_{109}$. Further, the remaining address input terminals A4 - A6 and A7 of the RAM$_{109}$ are held at a high level.

Fig. 7 shows a detailed internal circuit structure of the RAM. The Fig. 7 RAM circuit includes an X address decoder 116, a Y address decoder 117, sensing amplifiers 118 and pluraly of memory cells 119 or MC. In the RAM, X address decoder outputs QA, QB and Q7 are enabled so that accessing of the memory cells MC can be effected in the RAM through the data terminals D11 - D0. For example, corresponding data D8 is set in an address designated by value 5H at the address terminals A3 - A0, data D4 is set in an address designated by value 6H at the address terminals A3 - A0, and data D0 is stored at an address designated by value 7H at the address terminals A3 - A0. The data D11 - D0 stored in the RAM represents output data NA11 - NA0 of the program counter 112 (Fig. 6), which designates next address for memorizing returning address data for use in executing a call command.

When executing push and pop commands, the address input terminals operate in the same manner as in the execution of call and return commands. However, the data terminals D11 - D0 are connected differently. The data terminals D11 - D0 are connected to operand buses OB11 - OB0 (Fig. 6). In response to the push and call commands, the operand buses OB11 - OB8 are connected to the page register 113 or PAGE, the operand buses OB7 - OB4 are connected to the accumulator 114 or ACCA, and the operand buses OB3 - OB0 are connected to the accumulator 115 or ACCB. Consequently, the corresponding data D11 - D0 is stored in the designated address location. As described above, the three registers PAGE, ACCA and ACCB are stacked by a single command according to the invention. Further, since the stack area can be used as an ordinary RAM, this area can be efficiently utilized for other purposes than the stack operation.

## Claims

1. A stack system of a single chip microcomputer, comprising : a RAM (109)having address locations each operable to store selectively either of a return address data for use in execution of a call command and a plurality of register data for use in execution of a push command ; and means responsive to a single command for accessing the entire data stored in each address location to effect reading and writing of the data in the RAM (Fig 6)

# F I G. 1

X ADDRESS

STACK RAM 3

| Y ADDRESS | 0 | 1 | 2 | ········ | D | E | F |
|---|---|---|---|---|---|---|---|
| F | | | | ········ | RETURN ADDRESS DATA | | |
| E | | | | ········ | STACK DATA 3 | STACK DATA 2 | STACK DATA 1 |
| D | | | | ········ | ——— | ——— | STACK DATA 4 |

REGULAR WORKING AREA ⎬ STACK AREA

# F I G. 2A
## PRIOR ART

ADDRESS

F
E
D

# F I G. 2B
## PRIOR ART

ADDRESS

F
E
D

4

# FIG. 3 PRIOR ART

6

| ADDRESS | | RETURN ADDRESS DATA | | |
|---|---|---|---|---|
| F | | | | |
| E | —— | —— | OBJECT REGISTER DATA1 | |
| D | —— | —— | OBJECT REGISTER DATA2 | |
| C | —— | —— | OBJECT REGISTER DATA3 | |
| B | —— | —— | OBJECT REGISTER DATA4 | |

# FIG. 4

X ADDRESS

| Y ADDRESS | D | E | F |
|---|---|---|---|
| F | RETURN ADDRESS DATA | | |
| E | REGISTER DATA 3 | REGISTER DATA 2 | REGISTER DATA 1 |
| D | —— | —— | REGISTER DATA 4 |
| C | | | |

# FIG. 5

FIG. 6

RAM (128 × 4 bit)

A7, A6, A5, A4, A3, A2, A1, A0

D11–D4, D3–D0

PAGE2, PAGE1, PAGE0

RA3, RA2, RA1, RA0

SP2RAZ, ACC2RA, HW2RA, LW2RA, YS2RAZ

MPX (110), MPX (111)

PAGE (113), ACCA (114), ACCB (115)

OB11-8, OB7-4, OB3-0

OB 12 bit

NA11-4, NA3-0

C D (112)

DB 4 bit

101, 102, 103, 104, 105, 106, 107, 108, 109

FIG. 7

MC — MEMORY CELL
SA — SENSE AMP